# FASCICULE DE BREVET EUROPEEN

(11) **EP 1 554 048 B1**
(45) Date de publication et mention de la délivrance du brevet: **30.08.2006**
(21) Numéro de dépôt: 03771132.2
(22) Date de dépôt: 04.07.2003
(51) Int. Cl.: B04B 13/00, B04B 9/14, B04B 5/04, G01N 35/04

(54) **PROCEDE ET DISPOSITIF POUR LE PRETRAITEMENT PAR CENTRIFUGATION D'ECHANTILLONS**
VERFAHREN UND VORRICHTUNG ZUR VORBEHANDLUNG VON PROBEN DURCH ZENTRIFUGIEREN
METHOD AND DEVICE FOR PRETREATMENT OF SAMPLES BY CENTRIFUGING

(30) Priorité: 25.07.2002 FR 0209626
(43) Date de publication de la demande: 20.07.2005
(73) Titulaire: Stago Instruments, 92230 Gennevilliers (FR)
(72) Inventeur: LAGARDE, Benoît, F-95110 Sannois (FR)
(74) Mandataire: de Saint-Palais, Arnaud Marie
(86) Numéro de dépôt international: PCT/FR2003/002094
(87) Numéro de publication internationale: WO 2004/011152

(56) Documents cités:
- EP-A- 1 003 020
- US-A- 5 769 775
- US-A- 6 060 022
- PATENT ABSTRACTS OF JAPAN vol. 1995, no. 06, 31 juillet 1995 (1995-07-31) & JP 07 080355 A (KUBOTA SEISAKUSHO:KK), 28 mars 1995 (1995-03-28)
- PATENT ABSTRACTS OF JAPAN vol. 1998, no. 02, 30 janvier 1998 (1998-01-30) & JP 09 276743 A (ALOKA CO LTD), 28 octobre 1997 (1997-10-28)

## Description

La présente invention concerne un procédé et un dispositif pour le prétraitement par centrifugation d'échantillons de prélèvement sanguins contenus dans des tubes, préalablement à leur introduction dans un appareil automatique d'analyse.

D'une manière générale on sait qu'en vue de leurs analyses les tubes d'échantillons sont habituellement disposés en ligne dans des conteneurs ou portoirs contenant chacun plusieurs tubes (en général cinq) axés verticalement dans un plan médian vertical longitudinal du conteneur.

Ces portoirs comprennent une embase dans laquelle est réalisée une cavité prismatique transversale de section en forme de T (ou de queue d'aronde).

Ils sont transportés à l'intérieur des paniers dont les fonds sont équipés de rails de profils complémentaires à celui des susdites cavités.

Leur introduction dans ces paniers est assurée en les disposant côte à côte pour former une file orientée perpendiculairement à leur axe longitudinal et en les déplaçant en translation dans le sens de la file pour les faire glisser à l'intérieur des paniers où ils se trouvent maintenus et guidés grâce à l'engagement du rail dans les cavités des portoirs.

Le transfert des portoirs des paniers où ils se trouvent disposés à l'automate d'analyse s'effectue grâce à un poussoir mobile dans l'axe du rail et dont les déplacements pas à pas sont assurés au moyen d'un mécanisme comprenant un motoréducteur qui entraîne un pignon qui engrène avec une crémaillère axée perpendiculairement au rail et sur laquelle est solidarisé le poussoir.

Ce poussoir permet de déplacer les portoirs le long du rail afin d'amener le dernier portoir de la file sur un convoyeur à bande, axé perpendiculairement au rail qui alimente l'automate d'analyse.

Il s'avère que dans le cas où l'on souhaite effectuer certains types d'analyse, par exemple des tests d'hémostase sur des échantillons de sang, il est nécessaire de procéder à une centrifugation de ces échantillons avant d'effectuer l'analyse dans l'automate d'analyse.

A cet effet, on utilise des centrifugeurs comprenant un rotor à axe de rotation vertical à la périphérie duquel sont montées basculantes une pluralité de nacelles aptes à contenir chacune un ou plusieurs portoirs de tubes d'échantillons.

Une fois que les portoirs sont disposés dans la nacelle (en position verticale) le rotor est entraîné en rotation. De ce fait sous l'effet de la force centrifuge les nacelles se disposent à l'horizontale et les prélèvements contenus dans les tubes subissent une centrifugation.

Bien entendu, ce processus de centrifugation ne peut être effectué que si l'ensemble, constitué par le rotor, les nacelles et les portoirs munis de leurs tubes, est correctement équilibré.

En effet, dans le cas où cet ensemble n'est pas correctement équilibré, sa rotation engendre un moment vibratoire qui, au-delà d'un seuil, n'est plus tolérable.

De ce fait, la centrifugeuse comprend un système de sécurité qui stoppe la centrifugeuse lorsque ce moment vibratoire dépasse le susdit seuil.

Pour tenir compte de ce problème, il est donc nécessaire de prévoir préalablement à chaque opération de centrifugation une étape d'équilibrage.

Cette étape peut s'effectuer à la main en rajoutant des tubes à essais dans les porteurs incomplets. Toutefois cette solution implique la présence permanente d'un opérateur au poste de centrifugation. En effet, cette étape d'équilibrage s'avère difficilement automatisable et implique habituellement l'accès aux portoirs déjà disposés dans les nacelles de la centrifugeuse, ce qui oblige à intervenir au niveau de la conception de la centrifugeuse.

Ils existe déjà des procédés et des dispositifs de centrifugation avec traitement d'équilibrage tels que décrit dans le brevet US-A-5769775.

L'invention a donc plus particulièrement pour but un dispositif de centrifugation dans lequel l'alimentation de la centrifugeuse en portoirs, l'équilibrage de la centrifugeuse et le transfert des portoirs de la centrifugeuse à l'automate d'analyse s'effectuent automatiquement et ce, à l'aide de moyens relativement simples, fiables et relativement peu coûteux.

Elle propose, à cet effet, un procédé comprenant les phases opératoires suivantes :
- la détection de la présence des tubes à l'intérieur des portoirs au cours de leur transport vers la centrifugeuse ;
- la détection d'un déséquilibre prévisible de la centrifugeuse et lorsque cette détection révèle la présence d'un tel déséquilibre, du à la présence
- la simulation de la charge de la centrifugeuse incorporant le portoir incomplet ;
- la sélection d'un portoir d'équilibrage en fonction du nombre de tubes manquants dans le portoir incomplet ou d'un nombre impair de portoirs ;
- la détermination de la nacelle de la centrifugeuse à l'intérieur de laquelle le portoir d'équilibrage doit être disposé pour obtenir un bon équilibrage de la charge ;
- la mise en place de ce portoir dans ladite nacelle à la place du portoir d'échantillons qui aurait du s'y trouver, en provoquant ainsi un décalage dans l'ordre d'introduction des portoirs d'échantillons dans la centrifugeuse ;
- la remise en place du portoir d'équilibrage sur son aire de stockage lors du transfert des portoirs d'échantillons vers l'automate, une fois la centrifugation effectuée.

En ce qui concerne la sélection des portoirs d'équilibrage, l'invention simplifie cette opération en se basant sur le fait que la centrifugeuse tolère un déséquilibre légèrement supérieur à celui occasionné par l'absence d'un tube sur les cinq qui sont normalement présents dans le portoir. De ce fait, il suffit de prévoir seulement deux types de portoirs d'équilibrage correspondant respectivement à un portoir contenant deux tubes et à un portoir contenant quatre tubes pour compenser tous les déséquilibres possibles.

Un mode d'exécution de l'invention sera décrit ci-après, à titre d'exemple non limitatif, avec référence aux dessins annexés dans lesquels :
La figure 1 est une vue en perspective schématique d'un portoir de tubes ;
La figure 2 est une coupe verticale schématique d'une centrifugeuse ;
Les figures 3 à 6 sont des vues de dessus d'un dispositif de centrifugation selon l'invention à différents stades de fonctionnement de ce dispositif ;
Les figures 7 et 8 sont des coupes axiales schématiques illustrant le principe de fonctionnement du dispositif d'alimentation de la centrifugeuse associé au détecteur de présence des tubes dans les portoirs ;
Les figures 9 et 10 sont des organigrammes du programme utilisé pour effectuer l'équilibrage de la centrifugeuse.

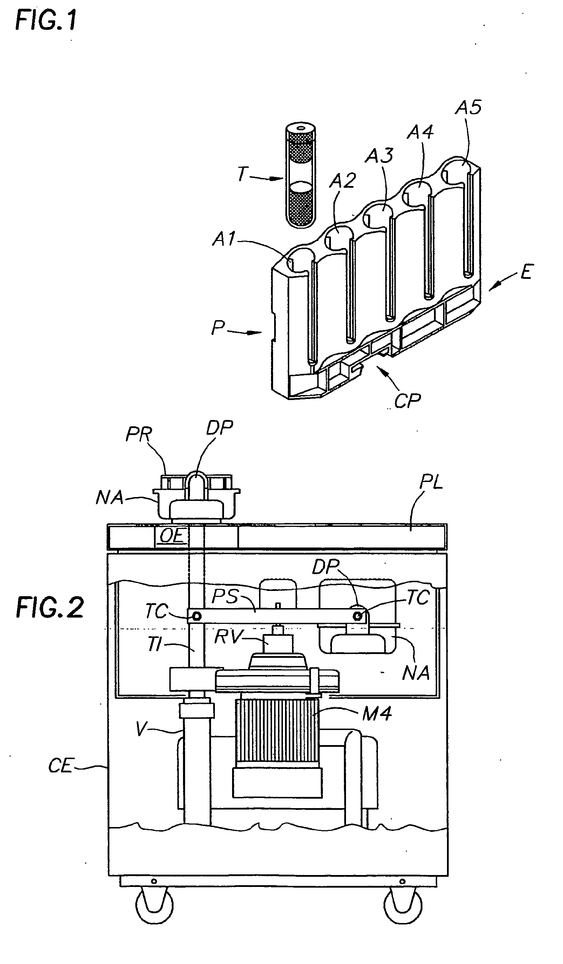

Dans cet exemple, le dispositif selon l'invention est destiné à effectuer un prétraitement par centrifugation d'échantillons contenus dans des tubes T disposés dans des portoirs P tels que, par exemple, celui qui est illustré sur la figure 1 avant introduction de ces portoirs P, un par un, dans un automate d'analyse AA.

Un tel automate d'analyse AA peut comprendre, comme décrit dans le brevet déposé au nom de la Demanderesse, une aire de pipetage FR-A-2764703 dans laquelle les tubes d'échantillons T, disposés dans leurs portoirs P et préalablement identifiés, sont amenés successivement et au-dessus de laquelle se déplace une tête de pipetage.

Au cours du processus qui précède la phase de réalisation des tests dans l'automate d'analyse AA, les portoirs P contenant les tubes (bouchés) d'échantillons (par exemple les prélèvements sanguins) sont disposés dans les nacelles NA d'une centrifugeuse CE, telle que celle qui est illustrée sur la figure 2 où ils sont soumis à une centrifugation. Dans tout ce processus les tubes T sont maintenus dans les portoirs pour éviter toute manipulation.

Au sortir de la centrifugeuse CE, les portoirs contenant les tubes sont amenés dans des paniers spécialement conçus, placés dans un distributeur de portoirs DP₁ qui équipe le poste d'alimentation PA₁ des portoirs P à l'automate d'analyse AA.

Les portoirs P utilisés peuvent consister en le portoir P illustré sur la figure 1 qui présente une forme générale parallélépipédique à bords verticaux chanfreinés. Ce portoir comprend une embase E munie d'une nervuration délimitant une cavité prismatique transversale CP et de section sensiblement en forme de C ou en queue d'aronde, destinée à venir coopérer avec un rail de guidage RG, de section complémentaire en forme de T.

Un tel rail RG est notamment prévu dans le fond des paniers PA₁, PA₂, ainsi que dans les aires de transfert dans lesquelles les portoirs P sont déplacés en translation perpendiculairement à leur axe de symétrie.

La partie supérieure du portoir P comprend ici cinq alvéoles cylindriques verticales A₁ à A₅, ouvertes au niveau de la face supérieure du portoir, destinées à recevoir cinq tubes T respectifs.

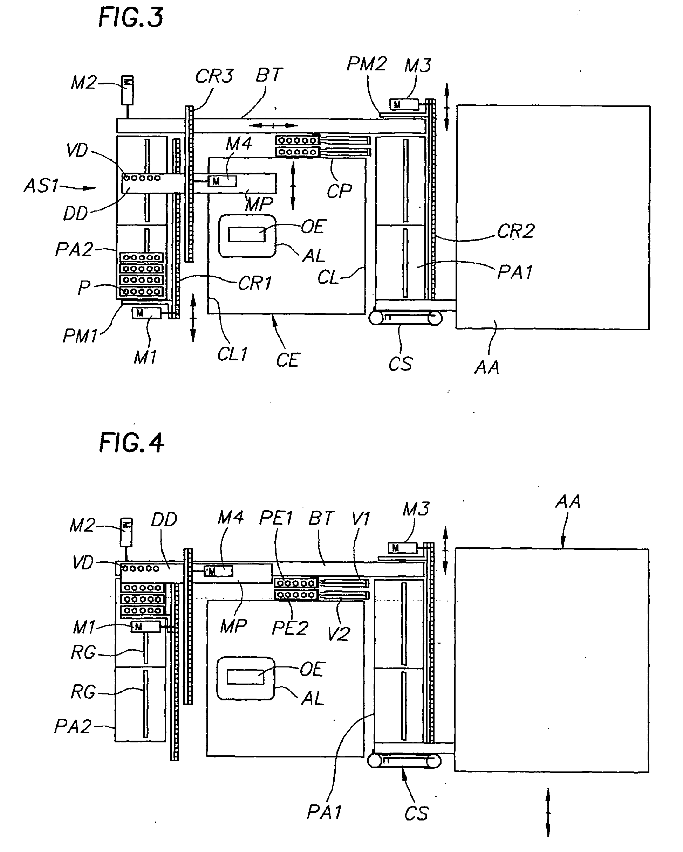

Les figures 3 à 7 montrent le trajet que suivent les portoirs P dans le dispositif de prétraitement, depuis un poste d'alimentation PA₂ de ce dispositif dans lequel les portoirs P sont disposés dans des paniers jusqu'au poste d'alimentation de l'automate d'analyse où ces portoirs sont à nouveau rassemblés dans un panier PA₁ auquel est associé un distributeur de portoir un à un DP₁.

Dans ces figures, la centrifugeuse CE a été représentée sous la forme d'un bloc rectangulaire à l'intérieur duquel on a représenté également par un bloc une aire d'alimentation extraction AL dans laquelle les portoirs peuvent être successivement introduits ou extraits, grâce à un mécanisme de préhension MP.

Le poste d'alimentation PA₂ est disposé le long d'un coté latéral CL₁ de la centrifugeuse CE située à l'opposé du poste d'alimentation PA₁ de l'automate AA, ces deux postes PA₁, PA₂ étant sensiblement adjacents au coté antérieur CA de la centrifugeuse CE.

Il est équipé d'un poussoir mobile PM₁ en translation le long du coté latéral CL₁ et entraîné par un dispositif faisant intervenir un moteur M₁ qui entraîne un pignon en prise sur une crémaillère CR₁.

Ce poussoir PM₁ a pour but d'extraire les portoirs P contenus dans les paniers se trouvant dans le poste d'alimentation PA₁, à les amener dans une aire de stockage AS₁ adjacente à une bande transporteuse BT entraînée par un moteur M₂ qui circule parallèlement au coté postérieur CP de la centrifugeuse CE et donc perpendiculairement à l'axe de déplacement du poussoir PM₁.

Cette bande transporteuse BT a pour but de transporter un par un les portoirs P poussés par le poussoir PM₁ jusqu'à une aire de préhension dans laquelle le mécanisme de préhension MP vient les prendre pour les amener jusqu'à l'aire d'alimentation AL de la centrifugeuse CE où ils sont disposés dans les nacelles NA. La bande BT permet en outre de transporter les poussoirs P extraits de la centrifugeuse CE par les moyens de préhension jusqu'à une aire de transport située du coté latéral CL₂ de la centrifugeuse adjacent au poste d'alimentation PA₂ de l'automate AA. Cette aire de transport fait intervenir un poussoir PM₂ mobile perpendiculairement au sens de défilement de la bande de transport BT de manière à transférer, par un déplacement en translation, les portoirs P amenés par la bande BT dans le panier équipant le poste d'alimentation PA₁. A cet effet le poussoir PM₂ est actionné grâce à un mécanisme faisant intervenir un pignon entraîné en rotation par un moteur M₃ qui engrène avec une crémaillère CR₂.

La distribution des portoirs P contenus dans le panier du poste d'alimentation PA₁, à l'intérieur de l'automate d'analyse AA , s'effectue au moyen d'une courroie sans fin CS montée sur des galets axés verticalement dont l'un est entraîné en rotation par un moteur. Cette courroie CS, qui est disposée en bout de panier parallèlement aux portoirs P, porte un taquet d'entraînement apte à venir en prise sur l'extrémité des portoirs P situé à l'opposé de l'ouverture d'admission de l'automate d'analyse AA.

Comme illustré sur la figure 3, la centrifugeuse CE pourra avantageusement comprendre un rotor RV à axe vertical entraîné par un moteur électrique M₄ et comportant une pièce support rotative PS munie d'une pluralité de couples de tourillons coaxiaux TC sur chacun desquels peuvent venir se suspendre des nacelles oscillantes NA conçues pour recevoir les portoirs P à raison de un ou plusieurs portoirs par nacelle. Dans cet exemple, les moyens pour assurer la suspension et permettre la rotation des nacelles NA consistent en des demi-paliers DP, ouverts vers le bas dans lesquels s'engagent les tourillons TC, de sorte que l'extraction de ces nacelles NA s'effectue simplement en les soulevant.

L'ensemble de ce mécanisme est logé dans un boîtier refermé dans sa partie supérieure par un plateau PL qui comprend, au niveau de la susdite zone d'alimentation, un orifice OE servant à l'extraction des nacelles NA.

A cet effet, la centrifugeuse comprend un mécanisme d'extraction consistant en une pièce de support montée sur la tige TI d'un vérin disposé au-dessous de l'orifice OE et destiné à soulever les nacelles NA jusqu'à un niveau situé au-dessus du plateau PL, de manière à ce que les portoirs P contenus dans les l'inverse, que ces moyens de préhension MP puissent y déposer de nouveaux portoirs P.

Au cours de leur soulèvement, les nacelles NA peuvent être solidarisées de façon temporaire sur l'extrémité de la pièce de support grâce à des aimants permanents.

Comme précédemment mentionné, l'invention a pour but de résoudre de façon automatique les problèmes d'équilibrage des charges du rotor de manière à obtenir un fonctionnement totalement automatisé de la centrifugation, ainsi que des différents transferts des portoirs jusqu'au poste d'alimentation de l'automate.

A cet effet, elle prévoit un dispositif de détection de présence des tubes à l'intérieur des portoirs lors de leur trajet depuis le poste d'alimentation PA₂ jusqu'à la bande transporteuse BT.

Ce dispositif de détection DD comprend ici une rangée de vérins de détection VD, axée perpendiculairement à l'axe de déplacement des portoirs P et montés sur une structure mobile en translation au-dessus des portoirs P depuis le poste PA₂ jusqu'à la bande BT. (La détection de la présence d'un tube s'obtenant lorsque la tige du vérin, en butée sur le tube, ne peut pas effectuer une course complète).

L'entraînement est assuré au moyen d'un mécanisme faisant intervenir un moteur M₄ entraînant un pignon qui engrène sur une crémaillère CR₃

Le mécanisme de préhension et de transport des portoirs, entre la bande BT et l'aire d'alimentation AL de la centrifugeuse CE, est solidaire de la structure portant les vérins de détection VD.

Conformément à l'invention, ce dispositif fait intervenir un processeur qui effectue la commande de tous les moteurs M₁ à M₄, du distributeur à bande CS ainsi que du fonctionnement de la centrifugeuse, de manière à obtenir la séquence de fonctionnement suivante.

Initialement, un panier contenant des portoirs (ici quatre portoirs) est disposé dans le poste d'alimentation PA₂, le poussoir PM₁ étant en position reculée (fig. 3).

Le poussoir PM₁ est alors actionné et repousse les quatre portoirs P dans une aire de stockage adjacente à la bande BT (fig. 4). Le dispositif de détection de présence DD se déplace alors au-dessus des portoirs P et, pour chaque portoir P, détecte la présence ou l'absence des tubes T contenus dans ce portoir P. Les informations relatives à ces présences ou ces absences sont transmises au processeur.

En fin de détection, le détecteur de présence et, par conséquent, le mécanisme de préhension se disposent au-dessus de la bande BT (fig. 4).

Ce processeur effectue des simulations grâce aux informations provenant du dispositif DD, de manière à pouvoir affecter chacun des poussoirs PM à une nacelle de la centrifugeuse CE en vue d'obtenir un équilibrage de cette dernière. Dans le cas où le processeur constate un déséquilibre, il peut substituer à l'un des poussoirs un poussoir d'équilibrage PE₁, PE₂.

Comme précédemment mentionné, dans le cas où la tolérance admise par la centrifugeuse CE est de un tube par portoir, il est possible de n'utiliser que deux portoirs d'équilibrage de type différent PE₁, PE₂ correspondant respectivement à un portoir comprenant quatre tubes et un portoir comprenant deux tubes.

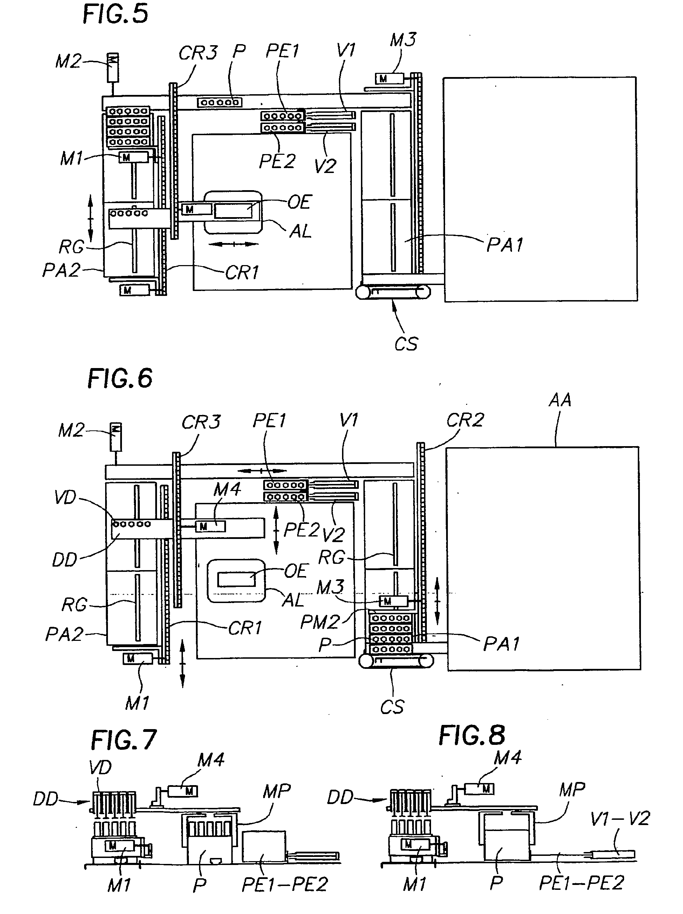

Ces deux portoirs PE₁, PE₂ sont disposés sur une aire de stockage du plateau de la centrifugeuse et poussés par deux vérins respectifs en un emplacement accessible par le mécanisme de préhension MP (fig. 8).

Une fois que le processeur a attribué à chacune des nacelles NA un portoir P (éventuellement un portoir d'équilibrage), le poussoir PM₁ pousse les portoirs P un à un sur la bande BT. Chaque portoir est ensuite pris en charge par le mécanisme de préhension MP qui le transporte et l'introduit dans la nacelle NA présente au-dessus de l'orifice OE (fig. 5 et 7).

Une fois qu'un poussoir PM a été introduit dans une nacelle NA, la nacelle NA est redescendue par le vérin V pour être suspendue à nouveau sur les tourillons TC de la pièce de support PS. Le rotor RV effectue alors une rotation pour amener la nacelle suivante NA déterminée par le processeur (rotor virtuel) au droit de l'orifice OE. Le vérin V peut ensuite soulever cette nacelle NA pour la faire passer au travers de l'orifice OE jusqu'à une position dans laquelle elle peut recevoir un portoir P qui lui a été affecté par le processeur.

Une fois que toutes les nacelles NA sont munies de portoirs P, la centrifugeuse CE effectue une étape de centrifugation.

Par un processus inverse, la centrifugeuse CE est déchargée. A cet effet, les nacelles NA sont successivement soulevées par le vérin V pour présenter le ou les portoirs P qu'elles contiennent au mécanisme de préhension MP. Celui-ci ramène le portoir P sur la bande BT ou, lorsqu'il s'agit d'un portoir d'équilibrage, sur l'aire de stockage.

Les portoirs P ramenés sur la bande BT sont amenés un à un au droit du poussoir PM₂ qui les repousse sur le panier PA₁ situé dans l'aire d'alimentation de l'automate AA. Ces portoirs P sont ensuite entraînés dans l'automate par la courroie CS.

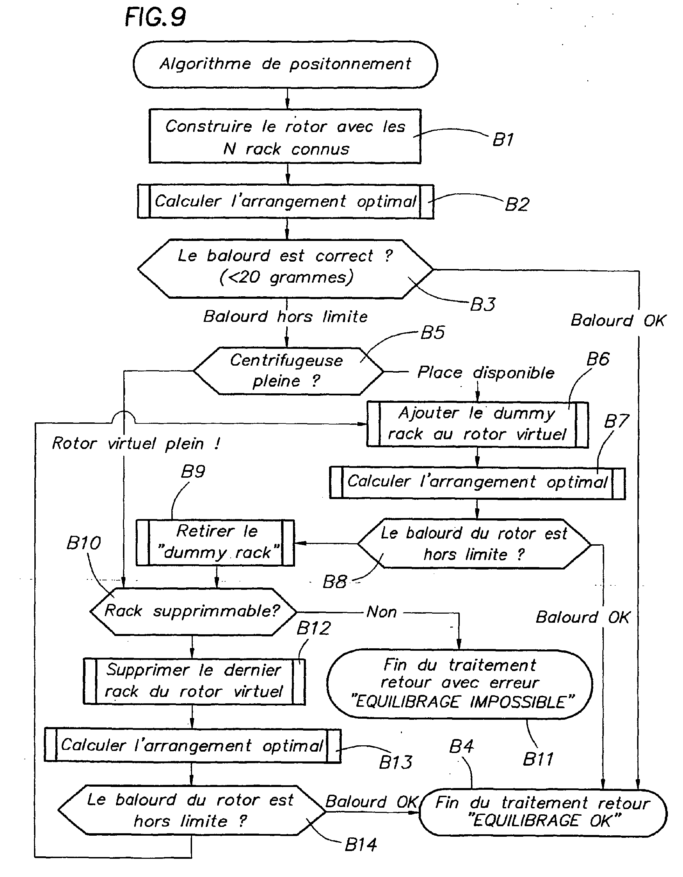

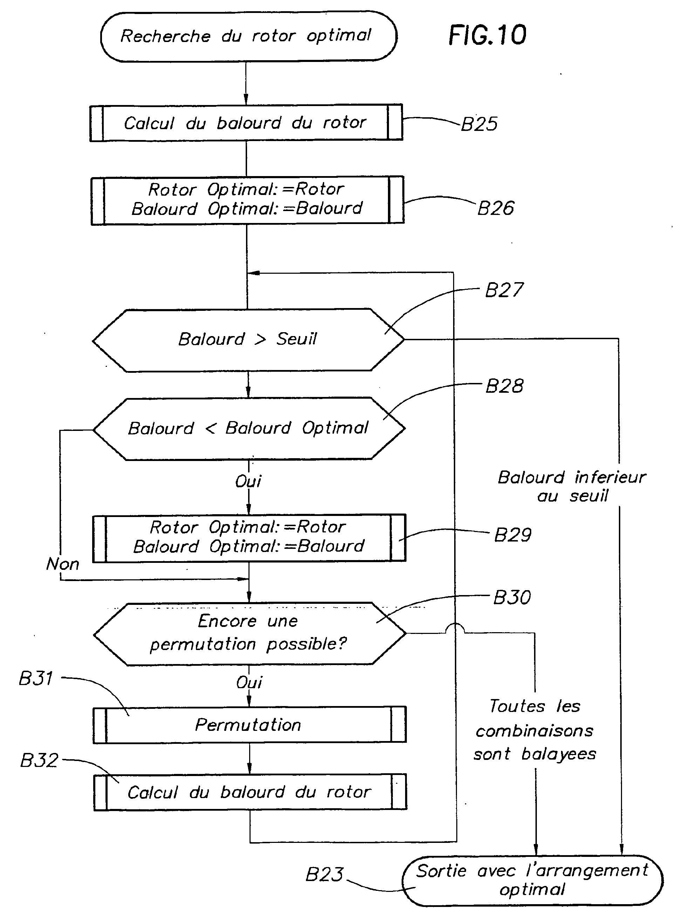

Les figures 9 et 10 montrent les différentes étapes exécutées par le processeur en vue de déterminer le positionnement des portoirs à l'intérieur de la centrifugeuse.

Pour déterminer ce positionnement, le processeur implémente l'algorithme de positionnement illustré sur la figure 9 qui comprend tout d'abord la construction d'un rotor virtuel (bloc B₁) contenant les portoirs P dont la présence des tubes T a été détectée par les détecteurs de présence, puis le calcul de l'arrangement optimal (bloc B₂). Le processeur calcule ensuite le balourd de cet arrangement et détermine si ce balourd est correct ou non (par exemple si il est inférieur à 20 grammes) (bloc B₃).

Si le balourd est correct le traitement d'équilibrage prend fin (bloc B₄).

Par contre, si le balourd dépasse la limite fixée (ici 20 grammes) le processeur détermine si la centrifugeuse est pleine (bloc B₅).

Si il existe une place disponible le processeur ajoute un portoir d'équilibrage au rotor virtuel (bloc B₆), puis il calcule l'arrangement optimal (bloc B₇). Si le nouveau balourd du rotor est correct (inférieur à la limite) (bloc B₈), le traitement d'équilibrage prend fin. (bloc B₄). Si le balourd du rotor dépasse la limite (bloc B₈), le processeur supprime le portoir d'équilibrage (bloc B₉), puis détermine si il existe un portoir supprimable (bloc B₁₀). Si tel n'est pas le cas, le processeur met fin au traitement et déclenche un signal d'erreur signifiant que l'équilibrage est impossible (bloc B₁₁). Si il existe un portoir supprimable (bloc B₁₀), le processeur supprime le dernier portoir du rotor virtuel (bloc B₁₂) et calcule l'arrangement optimal (bloc B₁₃).

Si le balourd du rotor est hors limite (bloc B₁₄), le processeur retourne à l'étape d'adjonction d'un portoir d'équilibrage (bloc B₆). Par contre, si le balourd est correct le traitement d'équilibrage prend fin (bloc B₄).

Si, lors de la détermination effectuée pour savoir si la centrifugeuse est pleine (bloc B₅) le rotor virtuel est plein, le processeur passe directement à l'étape de détermination si il existe un portoir supprimable (bloc B₁₀).

L'étape de calcul de l'arrangement optimal prévu sur l'algorithme de la figure 9 (blocs B₂ et B₇) peut s'effectuer conformément à l'algorithme de la figure 10 qui comprend successivement le calcul du balourd du rotor (bloc B₂₅), la détermination du rotor optimal ainsi que du balourd optimal (bloc B₂₆).

Le processeur détermine ensuite si le balourd est inférieur à un seuil prédéterminé (bloc B₂₇) et est inférieur au balourd optimal (bloc B₂₈).

Si le balourd est inférieur au seuil, la recherche du rotor optimal prend fin (bloc B₂₈). Si le balourd est inférieur au balourd optimal (bloc B₂₈), le système détermine le rotor optimal et le balourd optimal (bloc B₂₉) et si il existe encore une permutation possible (bloc B₃₀). Si le balourd était inférieur au balourd optimal au bloc B₂₈, le système passe directement au bloc B₃₀.

Si aucune permutation n'est possible, ceci signifie que toutes les permutations ont été balayées et la recherche du rotor optimal prend fin (bloc B₂₈). Si une permutation est possible, le système effectue la permutation (bloc B₃₁), puis calcule le balourd du rotor (bloc B₃₂), puis retourne au bloc B₂₇ pour une nouvelle séquence.

## Revendications

1. Procédé pour le prétraitement par centrifugation d'échantillon contenus dans des tubes (T) disposés dans des portoirs (P), préalablement à leur introduction dans un appareil automatique d'analyse (AA), la centrifugation s'effectuant dans une centrifugeuse (CE) comprenant un rotor à axe de rotation vertical à la périphérie duquel sont montées basculantes une pluralité de nacelles (NA) aptes à contenir chacune un portoir (P) de tubes d'échantillons (T),
**caractérisé en ce qu'**il comprend :
- la détection de la présence des tubes (T) à l'intérieur des portoirs (P) au cours de leur transport vers la centrifugeuse (CE) ;
- la détection d'un déséquilibre prévisible de la centrifugeuse (CE) et lorsque cette détection révèle la présence d'un tel déséquilibre du à la présence de portoirs incomplets ou d'un nombre impair de portoirs (P) ;
- la simulation de la charge de la centrifugeuse (CE) incorporant le portoir (P) incomplet ;
- la sélection d'un portoir d'équilibrage (PE₁, PE₂) en fonction du nombre de tubes manquants dans le portoir (P) incomplet ;
- la détermination de la nacelle (NA) de la centrifugeuse (CE) à l'intérieur de laquelle le portoir d'équilibrage (PE₁, PE₂) doit être disposé pour obtenir un bon équilibrage de la charge ;
- la mise en place de ce portoir (P) dans ladite nacelle (NA) à la place du portoir d'échantillons qui aurait du s'y trouver, en provoquant ainsi un décalage dans l'ordre d'introduction des portoirs d'échantillons (P) dans la centrifugeuse (CE) ;
- la remise en place du portoir d'équilibrage (PE₁, PE₂) sur son aire de stockage lors du transfert des portoirs d'échantillons vers l'appareil automatique d'analyse (AA), une fois la centrifugation effectuée.

2. Procédé selon la revendication 1,
**caractérisé en ce que**, dans le cas où la capacité des portoirs est de cinq tubes et où la centrifugeuse tolère un déséquilibre au moins égal à celui occasionné par l'absence d'un tube, il n'utilise que deux portoirs d'équilibrage correspondant respectivement à un portoir contenant deux tubes et un portoir contenant quatre tubes pour compenser tous les déséquilibres possibles.

3. Procédé selon l'une des revendications 1 et 2,
**caractérisé en ce que**, pour déterminer le positionnement des portoirs à l'intérieur de la centrifugeuse, il comprend les étapes de construction d'un rotor virtuel (bloc B₁) contenant des portoirs (P) dont la présence des tubes (T) a été détectée par des détecteurs de présence, le calcul de l'arrangement optimal (bloc B₂) et du balourd de cet arrangement, un test pour savoir si le balourd est correct ou non, le traitement d'équilibrage prenant fin (bloc B₄) si le balourd est correct, dans le cas où le balourd est incorrect, la détermination de l'état (plein ou vide) de la centrifugeuse (bloc B₅), il existe une place disponible, l'ajout d'un portoir d'équilibrage au rotor virtuel (bloc B₆), le calcul de l'arrangement optimal (bloc B₇), si le nouveau balourd du rotor est correct (bloc B₈) la fin du traitement d'équilibrage, si le nouveau balourd est incorrect, la suppression du portoir d'équilibrage (bloc B₉) puis un test pour savoir s'il existe un portoir supprimable (bloc B₁₀), dans la négative, la fin du traitement et le déclenchement d'un signal d'erreur (bloc B₁₁) et dans l'affirmative, la suppression du dernier portoir du rotor virtuel (bloc B₁₂) et le calcul de incorrect (bloc B₁₄) le retour à l'étape d'adjonction d'équilibrage (bloc B₆), le traitement prenant fin si ce balourd est correct.

4. Procédé selon la revendication 3,
**caractérisé en ce que**, si lors du test effectué pour savoir si la centrifugeuse est pleine (bloc B₅), le rotor virtuel est plein, il comprend un passage direct à l'étape de détermination si il existe un portoir supprimable (bloc B₁₀).

5. Procédé selon l'une des revendications 3 et 4,
**caractérisé en ce que** l'étape de recherche d'un rotor optimal comprend successivement le calcul du rotor du balourd du rotor (bloc B₂₅), la détermination du rotor optimal et du balourd optimal (bloc B₂₆), un test pour savoir si le balourd est inférieur à un seuil prédéterminé (bloc B₂₇) et inférieur au balourd optimal (bloc B₂₈), si le balourd est inférieur audit seuil, la fin de la recherche du rotor optimal, si le balourd est inférieur au balourd optimal (bloc B₂₈) la détermination du rotor optimal et du balourd optimal (bloc B₂₉) et de l'existence d'une permutation possible (bloc B₃₀), étant entendu que si le balourd est inférieur au balourd optimal (bloc B₂₈) le système passe directement au (bloc B₃₀), la fin de la recherche si aucune permutation n'est possible, tandis que si une permutation est possible le système effectue la permutation (bloc B₃₁), calcule le balourd du rotor (bloc B₃₂) puis retourne au bloc (B27)pour une nouvelle séquence.

6. Dispositif pour la mise en oeuvre du procédé selon l'une des revendications précédentes,
**caractérisé en ce qu'**il comprend un dispositif de détection de la présence des tubes (T) à l'intérieur des portoirs (P) au cours de leur transport vers la centrifugeuse (CE) et de la détection d'un .. déséquilibre prévisible de la centrifugeuse (CE) et lorsque cette détection révèle la présence d'un tel déséquilibre dû à la présence de portoirs incomplets ou d'un nombre impair de portoirs (P);
un processeur qui effectue des simulation de la charge de la centrifugeuse (CE) incorporant le portoir (P) incomplet et qui exécute les différentes étapes du procédé, et un poste d'alimentation (PA₂), disposé le long d'un coté latéral de la centrifugeuse (CE) à l'opposé d'un poste d'alimentation de l'automate d'analyse, ce poste d'alimentation comportant un premier poussoir (PM₁), mobile en translation, servant à extraire les portoirs (P) contenus dans le poste d'alimentation (PA₁), à les amener dans une aire de parallèlement au coté postérieur (CP) de la centrifugeuse (CE), perpendiculairement à l'axe de déplacement du poussoir (PM₁), un mécanisme de préhension (MP) apte à transférer les portoirs situés sur la bande dans les nacelles de la centrifugeuse qui ressortent d'une ouverture située dans une aire d'alimentation (AL) et de les ramener sur la bande après centrifugation, ladite bande transportant les poussoirs centrifuges jusqu'à une aire de transport située sur un coté latéral (CL₂) de la centrifugeuse adjacent au poste d'alimentation (PA₂) de l'automate (AA), ladite aire de transport comprenant un deuxième poussoir (PM₂) mobile perpendiculairement au sens de défilement de la bande (BT), de manière à transférer, par un déplacement en translation les portoirs amenés par la bande (BT) dans le poste d'alimentation de l'automate (AA).

7. Dispositif selon la revendication 6,
**caractérisé en ce que** la distribution des portoirs (P) dans le poste d'alimentation (PA₁) de l'automate (AA) s'effectue au moyen d'une courroie sans fin (CS), montée sur des galets axés verticalement et portant un taquet d'entraînement.

8. Dispositif selon l'une des revendications 6 et 7,
**caractérisé en ce qu'**il comprend un dispositif de détection de présence des tubes à l'intérieur des portoirs, lors de leur trajet depuis le poste d'alimentation (PA₂) jusqu'à la bande transporteuse, ce dispositif de détection (DP) comprenant une rangée de vérins de détection axés perpendiculairement à l'axe de déplacement des portoirs (P) et montés sur une structure mobile en translation au-dessus des portoirs (P) depuis le poste (PA₂) jusqu'à la bande (BT).

9. Dispositif selon la revendication 8,
**caractérisé en ce que** la susdite structure mobile du dispositif de détection est solidaire de la structure du susdit dispositif de préhension.

## Claims

1. Method for pretreating via centrifuging samples contained in tubes (T) placed in containers (P) prior to being introduced into an automatic analysis device (AA), the centrifuging being effected in a centrifugal machine (CE) comprising a rotor with a vertical axis, a plurality of boats (NA) being mounted tilting at the periphery of said rotor, said boats being able to each contain one container (P) with tubes of samples (T), **characterised in that** it comprises :
- the detection of the presence of tubes (T) inside the containers (P) at the time they are transported to the centrifugal machine (CE) ;
- the detection of a foreseeable lack of balance of the centrifugal machine (CE) and when this detection reveals the presence of this lack of balance owing to the presence of incomplete containers or an odd number of containers (P);
- the simulation of the load of the centrifugal machine (CE) incorporating the incomplete container (P);
- the selection of a balancing container (PE₁, PE₂) according to the number of tubes missing in the incomplete container (P) ;
- the determination of the boat (NA) of the centrifugal machine (CE) inside which the balancing container (PE₁, PE₂) needs to be arranged so as to obtain a good balancing of the load ;
- the placing of this container (P) in said boat (NA) in the place of the samples container which would be there, thus provoking a shift in the order of the introduction of the balancing containers (P) in the centrifugal machine (CE) ;
- the putting back of the balancing container (PE₁, PE₂) on its storage area at the time of transferring the sample containers to the automatic analysis device (AA) once centrifuging has been carried out.

2. Method according to claim 1, **characterised in that**, in the case where the capacity of the containers is five tubes and where the centrifugal machine tolerates a lack of balance equal at least to that brought about by the absence of a tube, it only uses two balancing containers respectively corresponding to one container containing two tubes and one container containing four tubes so as to compensate all the possible lacks of balance.

3. Method according to claim 1 or 2, **characterised in that**, so as to determine the positioning of the containers inside the centrifugal machine, it comprises the stages for constructing a virtual rotor (block B₁) containing the containers (P) in which the presence of the tubes (T) has been detected by presence detectors, the calculation of the optimum arrangement (block B₂) and of the unbalance of this arrangement, a test to know if the unbalance is correct or not, the balancing treatment ending (block B₄) if the unbalance is correct, and in the case where the unbalance is incorrect, the determination of the state (full or empty) of the centrifugal machine (block B₅) if an available place exists, a balancing container is added to the virtual rotor (block B₆), the optimum arrangement (block B₇) is calculated, if the new unbalance of the rotor is correct (block B₈), the balancing treatment ends; if the new unbalance is incorrects, the balancing container (block B₉) is eliminated followed by a test to know if there is a container able to be eliminated (block B₁₀), and if this is not the case the treatment ends and an error signal (block B₁₁) is triggered whereas if there is a container able to be eliminated the last container from the virtual rotor (block B₁₂) is eliminated and the optimum arrangement (block B₁₃) is calculated, and then in the case where the unbalance of the rotor is incorrect (block B₁₄), return to the balancing addition stage (block B₆), the treatment being ended if this unbalance is correct.

4. Method according to claim 3, **characterised in that**, if during the test carried out to know if the centrifugal machine is full (block B₅), the virtual rotor is full, it comprises a direct passage to the determination stage if there exists a container able to be suppressed (block B₁₀).

5. Method according to claim 3 and 4, **characterised in that** the stage for finding an optimum rotor successively comprises the calculation of the rotor of the unbalance of the rotor (block B₂₅), the determination of the optimum rotor and of the optimum unbalance (block B₂₆), a test to know if the unbalance is lower than a predetermined threshold (block B₂₇) and lower than the optimum unbalance (block B₂₈), if the unbalance is lower than said threshold, the search for the optimum rotor ends ; if the unbalance is lower than the optimum unbalance (block B₂₈), the determination is made of the optimum rotor and of the optimum unbalance (block B₂₉) and of the existence of a possible permutation (block B₃₀), it being understood that if the unbalance is lower than the optimum unbalance (block B₂₈) the system passes directly to (block B₃₀), the search ends if no permutation is possible, whereas if a permutation is possible the system carries out the permutation (block B₃₁), calculates the unbalance of the rotor (block B₃₂) and then returns to the block (B₂₇) for a new sequence.

6. Device for implementing the method according to one of the preceding claims, **characterised in that** it comprises a device of detection of the presence of tubes (T) inside containers (P) during their transport towards the centrifugal machine (CE) and of the detection of a foreseeable lack of balance of centrifugal machine (CE) and when this detection reveals the presence of such a lack of balance due to the incomplete presence of containers or of an odd number of containers (P), a processor which carries out simulations of the load of centrifugal machine (CE) incorporating the incomplete container (P) and which carries out the various stages of the process, a feeding station (PA₂) placed along one lateral side of the centrifugal machine (CE) opposite a feeding station of the analysis robot, this feeding station comprising a first thrustor (PM₁) able to move in translation and used to extract the containers (P) contained in the feeding station (PA₁), bring them into an area parallel to the rear side (CP) of the centrifugal machine (CE) perpendicular to the displacement axis of the thrustor (PM₁), a grasping mechanism (MP) able to transfer the containers situated on the belt conveyor into the boats of the centrifugal machine which come out of an opening situated in a feeding area (AL) and bring them back onto the belt conveyor after centrifuging, said belt conveyor transporting the centrifugal thrustors to a transport area situated on one lateral side (CL₂) of the centrifugal machine adjacent to the feeding station (PA₂) of the robot (AA), said transport area comprising a second thrustor (PM₂) able to move perpendicular to the running off direction of the belt conveyor (BT) so as to transfer via a translation movement the containers brought by the belt conveyor (BT) into the feeding station of the robot (AA).

7. Device according to claim 6, **characterised in that** the distribution of the containers (P) in the feeding station (PA₁) of the robot (AA) is effected by means of an endless belt (CS) mounted on rollers axed vertically and bearing a drive catch.

8. Device according to claim 6 or 7, **characterised in that** it comprises a device for detecting the presence of tubes inside the containers at the time they move from the feeding station (PA₂) to the belt conveyor, this detection device (DP) comprising a row of detection jacks axed perpendicular to the displacement axis of the containers (P) and mounted on a structure able to move in translation above the containers (P) from the station (PA₂) to the belt conveyor (BT).

9. Device according to claim 8, **characterised in that** said mobile structure of the detection device is integral with the structure of said grasping device.

## Patentansprüche

1. Verfahren zur Vorbehandlung durch Zentrifugierung von Proben, die in Röhrchen (T) enthalten sind, welche in Einsatzblöcken (P) angeordnet sind, bevor sie in einen Analyseautomaten (AA) eingesetzt werden, wobei die Zentrifugierung in einer Zentrifuge (CE) erfolgt, die einen Rotor mit senkrechter Drehachse umfasst, an dessen Peripherie eine Vielzahl von Schiffchen (NA) kippbar montiert sind, die dazu geeignet sind, je einen Einsatzblock (P) für Probenröhrchen (T) aufzunehmen, **gekennzeichnet dadurch, dass** es folgendes umfasst:
- Feststellung der Anwesenheit von Röhrchen (T) in den Einsatzblöcken (P) im Verlaufe deren Transports zur Zentrifuge (CE) hin;
- Erkennung eines voraussehbaren Ungleichgewichts der Zentrifuge (CE) und wenn es sich daraus ergibt, dass ein solches Ungleichgewicht auf unvollständige Einsatzblöcke oder einer ungeraden Zahl von Einsatzblöcken (P) beruht;
- Simulation der Last der Zentrifuge (CE), die den unvollständigen Einsatzblock (P) beinhaltet;
- Auswahl eines Ausgleichsblocks (PE₁, PE₂) gemäß der Zahl an fehlenden Röhrchen in dem unvollständigen Einsatzblock (P);
- Bestimmung des Schiffchens (NA) der Zentrifuge (CE), in welche der Ausgleichsblock (PE₁, PE₂) angeordnet werden muss, um einen guten Lastenausgleich zu erhalten;
- Einsetzen dieses Einsatzblocks (P) in besagtes Schiffchen (NA) auf den Platz des Einsatzblocks für Proben, der sich hätte darin befinden müssen, wobei eine Verschiebung in der Einführungsfolge der Probeneinsatzblöcke (P) in die Zentrifuge (C) bewirkt wird;
- Übergabe des Ausgleichsblocks (PE₁, PE₂) an dessen Lagerungsstelle bei Übergabe der Probeneinsatzblöcke an den Analyseautomaten (AA) nach erfolgter Zentrifugierung.

2. Verfahren nach Anspruch 1, **gekennzeichnet dadurch, dass**, im Falle einer Tragfähigkeit der Einsatzblöcke von fünf Röhrchen und wo die Zentrifuge ein Ungleichgewicht zulässt, das mindestens dem entspricht, das durch eine Abwesenheit eines Röhrchens entstanden ist, nur zwei Ausgleichsblöcke benutzt werden, die jeweils einem zwei Röhrchen enthaltenden Einsatzblock und einem vier Röhrchen enthaltenden Einsatzblock entspricht, um alle möglichen Ungleichgewichte auszugleichen.

3. Verfahren nach einem der Ansprüche 1 und 2, **gekennzeichnet dadurch, dass** dieses, um die Positionierung der Einsatzblöcke in der Zentrifuge zu bestimmen, folgendes umfasst: die Konstruktionsetappen eines die Einsatzblöcke (P) enthaltenden virtuellen Rotors (Block B₁), bei welchen die Anwesenheit von Röhrchen (T) mittels Anwesenheitsdetektoren festgestellt wurde; die Berechnung der optimalen Anordnung (Block B₂) und der Unausgeglichenheit dieser Anordnung; ein Test, um zu wissen, ob die Unwucht korrekt ist oder nicht, wobei der Ausgleichsvorgang (Block B₄) endet, wenn die Unwucht korrekt ist; falls die Unwucht nicht korrekt ist, Ermittlung des Zustandes (voll oder leer) der Zentrifuge (Block B₅); existiert einen freier Platz, Zugabe eines Ausgleichblocks zum virtuellen Rotor (Block B₆); Berechnung der optimalen Anordnung (Block B₇), wenn die neue Unwucht des Rotors korrekt ist (Block B₈) Ende des Ausgleichs; wenn die neue Unwucht nicht korrekt ist, Beseitigung des Ausgleichsblocks (Block B₉); danach ein Test, um zu wissen, ob ein wegnehmbarer Einsatzblock existiert (Block B₁₀); im negativen Falle, Ende des Vorgangs und Auslösung eines Fehlersignals (Block B₁₁) und bejahendenfalls, Beseitigung des letzten Einsatzblocks des virtuellen Rotors (Block B₁₂) und Berechnung der optimalen Anordnung (Block B₁₃), dann in dem Fall, wo die Unwucht nicht korrekt ist (Block B₁₄); Rückkehr zur Etappe der Beiordnung des Ausgleichsblocks (Block B₆); der Vorgang ist abgeschlossen, wenn diese Unwucht korrekt ist.

4. Verfahren nach Anspruch 3, **gekennzeichnet dadurch, dass** dieses, um zu wissen, ob die Zentrifuge voll ist (Block B₅) wenn der virtuelle Rotor nach erfolgtem Test voll ist, einen direkten Schritt zur Feststellung umfasst, ob ein wegnehmbarer Einsatzblock existiert (Block B₁₀).

5. Verfahren gemäß einem der Patentansprüche 3 und 4, **gekennzeichnet dadurch, dass** die Ermittlungsetappe eines optimalen Rotors nacheinander folgendes umfasst: Berechnung des Rotors und der Unwucht des Rotors (Block B₂₅), Ermittlung des optimalen Rotors und der optimalen Unwucht (Block B₂₆), ein Test, um zu wissen, ob die Unwucht niedriger als die vorbestimmte Schwelle (Block B₂₇) ist; wenn die Unwucht niedriger als die genannte Schwelle ist, Ende der Erfassung des optimalen Rotors, wenn die Unwucht niedriger als die optimale Unwucht (Block B₂₈) ist, Ermittlung des optimalen Rotors und der optimalen Unwucht (Block B₂₉) und der Existenz einer möglichen Änderung (Block B₃₀), wobei zu verstehen ist, dass, wenn die Unwucht niedriger als die optimale Unwucht (Block B₂₈) ist, das System direkt zum (Block B₃₀) übergeht; Ende der Ermittlung wenn keine Änderung möglich ist; jedoch wenn eine Veränderung möglich ist, führt das System die Veränderung (Block B₃₁) durch, berechnet die Unwucht des Rotors (Block B₃₂), kehrt dann zum Block (B₂₇) zurück für eine neue Abfolge.

6. Vorrichtung zur Durchführung des Verfahrens nach einem der vorangehenden Ansprüche, **gekennzeichnet dadurch, dass** dieses eine Vorrichtung zur Feststellung der Anwesenheit von Röhrchen (T) in den Einsatzblöcken (P) im Verlaufe deren Transports zur Zentrifuge (CE) hin und zur Erkennung eines voraussehbaren Ungleichgewichts der Zentrifuge (CE) umfasst, und wenn es sich daraus ergibt, dass ein solches Ungleichgewicht auf unvollständige Einsatzblöcke oder einer ungeraden Zahl von Einsatzblöcken (P) beruht; ein Prozessor, der das Simulieren der Last der Zentrifuge (CE) bewirkt, die den unvollständigen Einsatzblock (P) beinhaltet und der, die verschiedenen Schritte des Verfahrens ausführt, und eine Versorgungsstelle (PA₂) umfasst, die an einer Seite entlang der Zentrifuge (CE) gegenüber einer Versorgungsstelle des Analyseautomaten angeordnet ist, wobei diese Versorgungsstelle folgendes umfasst: einen ersten beweglichen Drücker (PM₁), der zum Herausziehen der Einsatzblöcke (P) dient, die in der Versorgungsstelle (PA₁) enthalten sind, und um die Zentrifuge (CE) einer Fläche parallel zur Hinterseite (CP), senkrecht zur Verschiebungsachse des Drückers (PM₁) zuzuführen; einen Greifmechanismus (MP), der dazu fähig ist, die sich auf dem Band befindlichen Einsatzblöcke den Schiffchen der Zentrifuge zu übergeben, die aus einer sich auf der Versorgungsfläche (AL) befindlichen Öffnung austreten und sie nach der Zentrifugierung auf das Band überführen, wobei besagtes Band die Zentrifugendrücker bis zu einer Transportfläche führt, die auf einer Seite (CL₂) der der Versorgungsstelle (PA₂) des Automaten (AA) angrenzenden Zentrifuge liegt, wobei besagte Transportfläche mit einem zweiten Drücker (PM₂) versehen ist, der in der Durchlaufrichtung des Bandes (BT) senkrecht beweglich ist, um durch eine Verschiebung die über das Band (BT) beförderten Einsatzblöcke den Versorgungsstellen des Automaten (AA) zu überbringen.

7. Vorrichtung nach Anspruch 6, **gekennzeichnet dadurch, dass** die Verteilung der Einsatzblöcke (P) in der Versorgungsstelle (PA₁) des Automaten (AA) mittels eines endlosen Riemens (CS) erfolgt, der auf senkrecht angelenkten Laufrollen montiert ist und einen Mitnehmerhaken trägt.

8. Vorrichtung nach einem der Ansprüche 6 und 7, **dadurch gekennzeichnet, dass** diese eine Vorrichtung zur Feststellung der Anwesenheit der Röhrchen innerhalb der Einsatzblöcke bei deren Strecke von der Versorgungsstelle (PA₂) zum Bandförderer hin umfasst, wobei diese Detektionsvorrichtung (DP) mit einer Reihe von senkrechten Detektionsgliedern versehen ist, die an die Verschiebungsachse der Einsatzblöcke (P) angelenkt und von dem Posten (PA₂) aus bis zum Band (BT) hin auf eine bewegliche Struktur oberhalb des Einsatzblocks (P) montiert sind.

9. Vorrichtung nach Anspruch 8, **gekennzeichnet dadurch, dass** besagte bewegliche Struktur der Detektionsvorrichtung einstückig mit der Struktur der besagten Greifvorrichtung ausgeführt ist.
